(19) Europäisches Patentamt
European Patent Office
Office européen des brevets

(11) **EP 1 831 598 B2**

## (12) NOUVEAU FASCICULE DE BREVET EUROPEEN
Après la procédure d'opposition

(45) Date de publication et mention de la décision concernant l'opposition:
**23.08.2017 Bulletin 2017/34**

(45) Mention de la délivrance du brevet:
**19.01.2011 Bulletin 2011/03**

(21) Numéro de dépôt: 05819281.6

(22) Date de dépôt: **15.11.2005**

(51) Int Cl.:
**F17C 5/00** $^{(2006.01)}$     **F17C 5/06** $^{(2006.01)}$

(86) Numéro de dépôt international:
**PCT/FR2005/050947**

(87) Numéro de publication internationale:
**WO 2006/070141 (06.07.2006 Gazette 2006/27)**

(54) **PROCÉDÉ DE CONTRÔLE DU REMPLISSAGE DE RÉSERVOIRS DE GAZ SOUS PRESSION**

VERFAHREN ZUM GESTEUERTEN FÜLLEN VON DRUCKGASBEHÄLTERN

METHOD FOR CONTROLLED FILLING OF PRESSURIZED GAS TANKS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2004 FR 0453155**

(43) Date de publication de la demande:
**12.09.2007 Bulletin 2007/37**

(73) Titulaire: **L'AIR LIQUIDE, Société Anonyme pour l'Etude et l'Exploitation des Procédés Georges Claude 75007 Paris (FR)**

(72) Inventeurs:
• **FAUDOU, Jean-Yves**
  **F-38700 CORENC (FR)**
• **LEHMAN, Jean-Yves**
  **F-94700 MAISONS ALFORT (FR)**
• **PREGASSAME, Jaya-Sitra**
  **F-75014 PARIS (FR)**

(74) Mandataire: **De Cuenca, Emmanuel Jaime L'Air Liquide S.A. Direction Propriété Intellectuelle 75 Quai d'Orsay 75321 Paris Cedex 07 (FR)**

(56) Documents cités:
EP-A- 1 146 277      EP-A- 1 205 704
EP-A- 1 398 603      EP-A- 1 452 794
US-A- 5 628 349      US-A1- 2002 014 277
US-A1- 2003 146 106

• CAMPBELL K. ET AL: 'Hydrogen Fueling Safety Advances' THE NATIONALHYDROGEN ASSOCIATIONS'S 14TH ANNUAL HYDROGEN MEETING 04 Mars 2003, WASHINGTON, DC, pages 1 - 10
• FAUDOU J.-Y. ET AL: 'Hydrogen refueling stations: safe filling procedures' 1ST INTERNATIONAL CONFERENCE ON HYDROGEN SAFETY 09 Septembre 2005, PISA, ITALY, pages 1 - 9
• 'International Conference on Hydrogen safety' PROGRAM FOR THE 1ST INTERNATIONAL CONFERENCE ON HYDROGEN SAFETY 08 Septembre 2005 - 10 Septembre 2005, CENTRO RICERCHE FIAT, PISA, ITALY,
• BARRAL K. ET AL: 'Thermal Effects of Fast Filling Hydrogen Compression in Refueling Stations' 15TH WORLD HYDROGEN ENERGY CONFERENCE 01 Juin 2004 - 01 Juin 2004, YOKOHAMA, JAPAN, pages 1 - 8

**Description**

L'invention concerne un procédé de contrôle du remplissage de bouteilles de gaz.

Dans la présente invention on utilisera indifféremment les termes « bouteilles » ou « réservoirs », qui désignent des conteneurs hermétiques permettant de stocker du gaz sous pression.

La protection de l'environnement s'avérant être une préoccupation de plus en plus présente à la fois pour les industriels et pour les particuliers, la demande en carburants « propres » pour les véhicules automobiles est de plus en plus grande.

Une des possibilités de remplacement des carburants classiques est l'utilisation de gaz.

Cependant, si remplir un réservoir d'essence ou de fuel qui sont des combustibles liquides, est une opération facile et rapide, l'opération de remplissage de réservoirs de gaz est beaucoup plus délicate. Du fait de la compressibilité des gaz, le remplissage peut conduire à des échauffements importants et pose également le problème du « comptage » de la quantité de matière transférée.

En effet, le gaz doit être injecté à partir d'une zone de stockage de gaz dans des réservoirs ou bouteilles de gaz sous pression (200bar ou plus selon le gaz et l'application); la zone de stockage étant elle-même à haute pression ou bien à faible pression et dans de cas il est nécessaire d'utiliser un compresseur.

Pour des raisons de sécurité, la pression finale dans le réservoir tout comme la température du gaz à l'intérieur du réservoir et la masse de gaz stockée ne doivent pas dépasser les limites de résistance du réservoir telles que déterminées par les constructeurs de ces réservoirs. En outre, plus le remplissage est rapide, plus la montée en température est importante et donc plus il est difficile d'optimiser la quantité de gaz à l'intérieur du réservoir.

Les réservoirs sont de ce fait très souvent remplis en dessous de leur capacité, le remplissage doit être plus fréquent et la consommation est difficile à apprécier, ce qui est source de désagrément pour l'utilisateur.

Par ailleurs, il faut noter que la température du gaz à l'intérieur de la bouteille est très difficile à obtenir car elle nécessiterait l'installation d'une sonde thermique directement placée dans la bouteille avec tous les problèmes d'étanchéité que cela suppose, et une connexion entre le véhicule et la station de stockage pour l'échange d'information.

Bien entendu, les mêmes difficultés se présentent pour l'approvisionnement en gaz de tous les types de réservoirs ou bouteilles.

De façon classique, le remplissage s'effectue à la température ambiante en utilisant alors le principe consistant à contrôler des paramètres mesurés et/ou à estimer la valeur maximale de ces paramètres qui sont la pression et/ou la température, en utilisant la mesure de la température embarquée, c'est-à-dire la mesure de la température du gaz à l'intérieur des bouteilles, comme dans les demandes de brevet EP1205704 et EP1336795, ou bien en utilisant la mesure de la masse injectée qui est réalisée par pesage (US 4,527,600, US 4,648,430, US 5,771,947, US 5,771,948, US 5,810,058, US 5,881,779) ou par mesure de débit (US 4,993,462, US 5,238,030, US 5,752,552).

Par ailleurs, un autre procédé pour pallier au problème du remplissage insuffisant, consiste à refroidir le gaz en entrée de bouteille à une température fixée à une valeur en dessous de la température ambiante comme ceci est décrit dans la demande de brevet EP1331289. Cependant, la température choisie n'est pas optimisée et ne représente pas une solution d'ensemble pour assurer le remplissage optimum et sécuritaire des bouteilles.

Le document EP 1 452 794 A2 décrit un procédé de remplissage à une vitesse qui est fonction de la température ambiante, le remplissage étant interrompu lorsque la température mesurée dans le réservoir atteint une limite maximale.

Le document US 5 628 349 décrit un procédé de remplissage à une vitesse de remplissage qui est fonction de la température mesurée du gaz dans le réservoir.

Le document US 6 598 624 décrit un procédé de remplissage dans lequel la vitesse de remplissage est adaptée en fonction de la pression instantanée mesurée dans le réservoir.

Tous les procédés décrits sont ou difficiles à mettre en oeuvre car les paramètres à mesurer sont difficiles d'accès, notamment la température interne du gaz ou ne sont pas adaptés à certaines applications comme le pesage pour l'application véhicule, ou utilisent des moyens de mesure qui manquent de précision dans certains cas, notamment les appareils de mesure de débit massique dans le cas de l'hydrogène, et alors le contrôle de la température maximale dans la bouteille n'est pas effectuée, ou encore ne permettent pas une optimisation du remplissage.

Il existe donc un besoin réel en un procédé de contrôle du remplissage de bouteilles ou réservoirs de gaz qui soit à la fois fiable quelles que soient les données à la disposition de l'opérateur et notamment lorsqu'il n'a pas accès à la température dans les réservoirs, facile à mettre en oeuvre, facile à utiliser et adapté pour tout type de bouteille et tout type de remplissage, notamment pour des remplissages rapides.

Dans la présente invention, les différents termes suivants sont utilisés.

La « pression nominale » ou « pression de travail » est la pression maximale que la charge gazeuse peut atteindre à une température uniforme, par exemple à 15°C (288K), la bouteille étant pleine.

La « température nominale » est la température à laquelle est définie la pression nominale de la bouteille (typiquement 15°C).

La « température de calcul des bouteilles » est la température maximale pouvant être atteinte dans une bouteille en service, cette valeur est donnée par le fabricant.

La « capacité nominale de remplissage » est la masse de gaz qui peut être stockée dans une bouteille donnée. Cette valeur est également spécifiée par le fabricant et est en général donnée sous la forme d'une pression nominale à une température nominale.

La « pression maximale autorisée» de la bouteille est la pression maximale pouvant être atteinte dans une bouteille en service.

Les présents inventeurs, à la suite de recherches longues et approfondies, ont trouvé que les différentes exigences citées pouvaient être satisfaites selon la revendication 1 en calculant une pression maximale de remplissage correspondant à la plus sévère des deux conditions suivantes : capacité nominale de remplissage ou température de calcul des bouteilles. Si la pression finale de remplissage est inférieure ou égale à cette pression maximale de remplissage, on reste dans les limites de fonctionnement de la bouteille.

Ce procédé est dit « sécuritaire » car il permet de respecter les deux valeurs limites de sécurité que sont la capacité nominale et la température maximale autorisée par la bouteille.

La pression maximale de remplissage est calculée en fonction de la température ambiante et de la pression initiale qui sont mesurées au préalable ainsi que de la vitesse de remplissage exprimée par exemple en unités de pression par unités de temps (en bar/secondes par exemple).

De façon pratique, la pression initiale des bouteilles est d'abord mesurée en équilibrant le connecteur et la ligne de remplissage avec les bouteilles en injectant une petite quantité de gaz. La température ambiante est également mesurée au niveau de la station de remplissage. La température ambiante mesurée au niveau de la station doit être représentative de l'ambiance au niveau des bouteilles. En général, la température mesurée au niveau de la borne de remplissage est assez représentative de la température au niveau des bouteilles mais il peut être utile de s'en assurer. Le système calcule ensuite la pression maximale correspondant à la masse nominale ou à la température de calcul, à l'aide des paramètres mesurés que sont la température ambiante et la pression initiale dans la bouteille et à l'aide de la valeur de la vitesse en unité de pression par unité de temps déterminée. Au cours du remplissage, la pression de gaz est mesurée au niveau du connecteur ou de la ligne de remplissage, en aval de l'élément sonique. La pression mesurée à ce niveau est égale à la pression dans les bouteilles au cours du remplissage. Un automate calcule alors la dérivée de cette pression par rapport au temps et ce paramètre est représentatif de la vitesse de remplissage du réservoir. Le remplissage est alors interrompu lorsque la pression dans les bouteilles atteint la valeur maximale ainsi calculée. Le remplissage a donc été contrôlé uniquement à l'aide de la pression d'entrée mesurée.

Selon l'invention, il n'est donc pas nécessaire de mesurer en temps réel la température du réservoir.

Selon un autre mode de réalisation particulier, la valeur de la dérivée de la pression d'entrée du gaz en fonction du temps ou vitesse de remplissage en unité de pression par unité de temps peut être déterminée selon deux critères :

■ Soit la vitesse de remplissage doit permettre d'atteindre un taux de remplissage minimal de la bouteille par rapport à sa capacité nominale de remplissage et ce quelque soit la durée du remplissage. Ce taux de remplissage minimal est une donnée intrinsèque du système et correspond à une valeur compatible avec les exigences du client. Dans le domaine du remplissage de véhicule hydrogène par exemple, un client peut typiquement exiger un taux de remplissage minimal de 90% par exemple.

■ Soit la vitesse de remplissage doit permettre de finir le remplissage dans une durée maximale donnée et ce quelque soit le taux de remplissage à la fin du remplissage. Cette durée de remplissage maximale est une donnée intrinsèque du système et correspond à une valeur compatible avec les exigences du client. Dans le domaine du remplissage de véhicule hydrogène par exemple, un client peut typiquement exiger une durée maximale de remplissage de 3 min par exemple.

Une fois le critère choisi, la vitesse de remplissage peut dépendre alors de la température ambiante et de la pression initiale mesurée au préalable.

Ces choix (quel critère et quelle valeur limite) peuvent être laissés à l'initiative du client ou de l'opérateur de la station de remplissage et peut être fait avant chaque nouveau remplissage ou fixé pour tous les remplissages.

Cette vitesse est typiquement comprise entre 0,05 bar/s et 20 bar/s, de préférence entre 0,10 et 15 bar/s et plus préférentiellement encore entre 0,5 bar/s et 12 bar/s.

Selon une variante avantageuse, le remplissage peut être réalisé « à froid » c'est à dire que le remplissage est effectué avec du gaz refroidi à une température donnée.

Selon ce mode de réalisation particulier, la température d'entrée du gaz dans la bouteille est calculée en fonction des paramètres suivants : la pression initiale, la température ambiante, la pression finale de remplissage et la vitesse de remplissage, afin d'atteindre la capacité nominale de stockage de la bouteille, dans une durée de remplissage donnée et tout en respectant les limites de fonctionnement de la bouteille.

La pression finale peut être fixée arbitrairement ou en fonction des conditions process par exemple. Mais elle doit être de fait inférieure à la pression maximale autorisée par la bouteille. Par exemple, dans le cas où le remplissage de la bouteille sous pression se fait par équilibrage de capacités de stockage sous pression, la pression finale sera limitée par la pression de stockage des capacités voire à une valeur inférieure du fait de l'équilibrage en pression.

La température de gaz à l'entrée ainsi déterminée permet alors de remplir les deux conditions suivantes : la capacité nominale est atteinte et les limites de fonctionnement de la bouteille sont respectées.

Ce procédé est à la fois « sécuritaire » et « optimal », car il permet d'optimiser la masse de gaz finalement stockée dans la bouteille tout en respectant les limites de fonctionnement de la bouteille.

De façon pratique, la pression initiale des bouteilles est d'abord mesurée en équilibrant le connecteur et la ligne de remplissage avec les bouteilles en injectant une petite quantité de gaz. La température ambiante est également mesurée au niveau de la station de remplissage. La température ambiante mesurée au niveau de la station doit être représentative de l'ambiance au niveau des bouteilles. En général, la température mesurée au niveau de la borne de remplissage est assez représentative de la température au niveau des bouteilles mais il peut être utile de s'en assurer. Une vitesse de remplissage en unité de pression par unité de temps est déterminée. Une pression finale de remplissage est également fixée par l'opérateur.

Le système calcule ensuite une température de gaz en entrée de bouteille à l'aide des paramètres mesurés suivants : température ambiante, pression initiale dans la bouteille (mesurée au niveau du connecteur), et à l'aide de la pression finale fixée par l'opérateur ou par les conditions du process, et de la valeur de la dérivée de la pression par rapport au temps.

Si la température ainsi calculée est supérieure à la température ambiante, l'opérateur met en oeuvre le procédé selon le mode de réalisation précédemment décrit (le remplissage est interrompu lorsque la pression d'entrée atteint la pression maximale de remplissage correspondant à la plus sévère des deux conditions suivantes : capacité nominale de remplissage ou température de calcul des bouteilles).

Si la température ainsi calculée est inférieure à la température ambiante, le gaz en entrée de bouteille doit être refroidi à cette température. La température d'entrée ainsi calculée permet le remplissage jusqu'à la charge nominale tout en restant dans les limites de fonctionnement de la bouteille, le remplissage est terminé lorsque la pression dans les bouteilles atteint la pression définie.

Selon un autre mode de remplissage « à froid », la température de remplissage est une condition fixe. Dans ce cas, la pression finale de remplissage peut elle être calculée pour permettre un remplissage efficace.

Selon ce mode de réalisation particulier, la pression finale de remplissage est déterminée et calculée en fonction des paramètres suivants : la pression initiale, la température ambiante, la température du gaz en entrée de bouteille et la vitesse de remplissage, afin d'atteindre la capacité nominale de stockage de la bouteille, dans une durée de remplissage donnée et tout en respectant les limites de fonctionnement de la bouteille.

Le procédé de l'invention est particulièrement utile pour les remplissages rapides, notamment les remplissages rapides de véhicules automobiles.

Dans la présente invention, un remplissage rapide est un remplissage qui doit être réalisé en une durée allant de moins d'1 minute jusqu'à 10 minutes. Cette durée dépend des bouteilles à remplir et/ou du type de véhicule (scooter, voiture ou bus par exemple).

La présente invention est utilisable quelle que soit la nature du gaz. Il peut s'agir par exemple de méthane, hydrogène, oxygène, azote, hélium, etc. L'application véhicule vise en particulier le gaz naturel ou méthane et l'hydrogène.

Les bouteilles ou réservoirs ont une capacité variable selon leur destination. Par exemple, pour les voitures particulières, la capacité globale est de l'ordre de 100 à 150L. Le véhicule peut être doté d'un seul réservoir de cette capacité ou bien de plusieurs réservoirs plus petits disposés en parallèle.

De façon avantageuse, la forme de la bouteille doit être telle qu'en fin de remplissage, elle permette l'obtention d'une température de gaz homogène. Une telle caractéristique dépend de la géométrie de la bouteille qui avantageusement est de forme généralement cylindrique avec un rapport longueur L sur diamètre D, L/D, inférieur à 6, de préférence de 1 à 5, et plus préférentiellement encore de 1 à 4.

En outre, de façon avantageuse, les réservoirs à remplir se trouvent disposés de façon horizontale ou bien de façon verticale et alors, le remplissage se fait du haut vers le bas.

L'invention va être décrite plus en détail dans les exemples suivants qui sont donnés uniquement à titre d'illustration de l'invention et qui ne sont pas limitatifs.

## EXEMPLES

### EXEMPLES 1 et 2 : Remplissage sécuritaire par estimation de la pression finale

Dans les exemples 1 et 2 qui suivent, la bouteille utilisée est une bouteille DYNETEK 150L.

Le gaz de remplissage est de l'hydrogène.

Les notations suivantes sont utilisées :

- Pf = pression finale en bar, Pf = Min{ $Pf_{85°C}$ ; $Pf_{100\%masse}$} où $Pf_{100\%masse}$ est la pression limite au-delà de laquelle on dépasse la masse nominale stockée dans la bouteille et $Pf_{85°C}$ est la pression limite au-delà de laquelle on dépasse la limite de température de la bouteille.
- Tamb = Température ambiante en K
- P0 = Pression initiale en bar
- (P0, 15°C) = pression initiale ramenée à 15°C en bar
- V = vitesse en bar/s
- Tr = température du gaz de remplissage (K)
- Tf = température finale en K

## Equations de calculs

$Pf_{100\%masse}$ qui est la pression finale limite au delà de laquelle on dépasse la masse nominale stockée dans la bouteille est déterminée selon l'équation (1) suivante :

$$\frac{Pf_{100\%masse}}{Tamb} = (a \times LN(V) + b) \times (P0, 15°C) + c \times LN(V) + d \quad (1)$$

Où a, b, c et d sont des coefficients obtenus par régression (par des essais ou par des simulations).Ces coefficients peuvent éventuellement être propres à un type de bouteille.

$Pf_{85°C}$ qui est la pression finale limite au delà de laquelle on dépasse la température de calcul de la bouteille est déterminée selon l'équation (2) suivante

$$Pf_{85°C} = AA \times P0^3 + BB \times P0^2 + CC \times P0 + DD$$

Avec

$$AA = aaa \times Tamb^2 + aab \times Tamb + aac$$

$$BB = bba \times Tamb^2 + bbb \times Tamb + bbc$$

$$CC = cca \times Tamb^2 + ccb \times Tamb + ccc$$

$$DD = dda \times Tamb^2 + ddb \times Tamb + ddc$$

Et où les coefficients aaa, aab, aac, bba, bbb, bbc, cca, ccb,ccc, dda, ddb et ddc sont des polynômes d'ordre 3 de la vitesse V de remplissage.

Les différents coefficients déterminés sont spécifiques à un type de bouteille et sont déterminés par régression (par des essais ou par des simulations).

Pour le remplissage froid, $Pf_{100\%masse}$ qui est la pression finale limite au-delà de laquelle on dépasse la masse nominale stockée dans la bouteille est déterminée selon l'équation suivante :

$$Pf_{100\%masse} = Tamb \times [(a \times LN(V) + b) \times (P0, 15°C) + (c \times LN(V) + d)] + (e + f \times P0 + g \times V) \times (Tr - Tamb)$$

Où a, b, c, d, e, f et g sont des coefficients obtenus par régression (par des essais ou par des simulations). Ces coefficients peuvent être propres à un type de bouteille. a,b, c et d peuvent être les mêmes coefficients que ceux utilisés pour le remplissage avec du gaz à température ambiante.

**Exemple 1 :**

L'opérateur souhaite remplir une bouteille DYNETEK 1501 dont la température maximale de service est de 85°C (358K) avec de l'hydrogène.

Il mesure la température ambiante (32°C) et la pression initiale à l'entrée de la bouteille (50 bars). Il choisit de remplir cette bouteille à une vitesse de 2 bars par seconde.

Le calculateur lui indique alors à l'aide de l'équation (1) que $Pf_{100\%masse}$ =447 bars et que $Pf_{85\%}$=304 bars La pression finale de remplissage est alors égale au minimum de ces deux valeurs soit 304bar.

L'opérateur règle alors la vitesse de remplissage à 2 bars par seconde et il commence le remplissage tout en mesurant la pression au niveau du connecteur, comme indiqué précédemment. Un automate calcule la dérivée de cette pression par rapport au temps et permet de contrôler la vitesse de montée en pression par rapport à la consigne de 2bar/s.

Lorsque cette pression atteint 304 bars, le remplissage est arrêté.

Le protocole de remplissage ainsi suivi est résumé dans le tableau ci-dessous.

| Paramètres | valeurs | Mode d'obtention |
|---|---|---|
| Température ambiante | 32°C | Mesure fixe |
| Pression initiale | 50 bars | Mesure fixe |
| Vitesse de remplissage | 2bar/s | Choix de l'opérateur |
| Pression maximale autorisée | 304 bars | calcul |
| Taux de remplissage | 70% | calcul |
| Température finale[1] | 85°C | calcul |
| Durée totale du remplissage | 2,1 min | calcul |
| [1]paramètre limitant le remplissage | | |

**Exemple 2 :**

L'opérateur souhaite remplir une bouteille DYNETEK 1501 dont la température maximale est de 85°C (358K).

Il mesure la température ambiante (20°C) et la pression initiale à l'entrée de la bouteille (60 bars). Il choisit alors de remplir cette bouteille à une vitesse de 2 bars par seconde.

Le calculateur lui indique à l'aide de l'équation suivante que pour un remplissage à 100%, la pression finale est de 427 bars.

La pression finale correspond à une température finale de 85°C et est supérieure à 438bar. Le minimum des deux valeurs correspond bien à 427bar.

L'opérateur règle alors la vitesse de remplissage à 2 bars par seconde et il commence le remplissage tout en mesurant la pression au niveau du connecteur, comme indiqué précédemment. Un automate calcule la dérivée de cette pression par rapport au temps et permet de contrôler la vitesse de montée en pression par rapport à la consigne de 2bar/s. On interrompt le remplissage lorsque la pression atteint 427bar.

Le protocole de remplissage ainsi suivi est résumé dans le tableau ci-dessous.

| Paramètres | valeurs | Mode d'obtention |
|---|---|---|
| Température ambiante | 20°C | Mesure fixe |
| Pression initiale | 60 bars | Mesure fixe |
| Vitesse de remplissage | 2bar/s | Choix de l'opérateur |
| Pression maximale autorisée | 427 bars | calcul |
| Taux de remplissage[1] | 100% | calcul |
| Température finale | 77°C | calcul |
| Durée totale du remplissage | 3,1 min | calcul |
| [1]paramètre limitant le remplissage | | |

**Exemple 3 : Remplissage sécuritaire optimisé par estimation de la température en entrée:**

L'opérateur souhaite remplir avec de l'hydrogène une bouteille de type DYNETEK 150L dont la pression de service est 350bar et pouvant supporter une pression maximale de 438bar. L'opérateur souhaite terminer le remplissage à une pression de 400bar.

L'opérateur mesure la température ambiante (35°C) et la pression à l'entrée de la bouteille (30 bars). Il choisit de remplir cette bouteille à une vitesse de 1,25 bar par seconde.

Le calculateur lui indique alors que le remplissage doit être fait à une température d'entrée du gaz de -33°C.

L'opérateur règle alors la température d'entrée du gaz à -33°C et la vitesse de remplissage à 1,25 bar par seconde et il commence le remplissage tout en mesurant la pression dans la bouteille. La pression est mesurée de manière dynamique au niveau du connecteur.

Un automate calcule la dérivée de cette pression par rapport au temps et permet de contrôler la vitesse de montée en pression par rapport à la consigne de 1,25bar/s. Lorsque la pression dans la bouteille atteint 400 bars, le remplissage est arrêté.

Le protocole de remplissage ainsi suivi est résumé dans le tableau ci-dessous.

| Paramètres | valeurs | Mode d'obtention |
|---|---|---|
| Température ambiante | 35°C | Mesure instantanée |
| Pression initiale | 30 bars | Mesure fixe |
| Vitesse de remplissage | 1,25bar/s | Choix de l'opérateur |
| Pression finale | 400bars | Choix de l'opérateur |
| Température de remplissage | -33°C | calcul |

**Exemple 4 :**

L'opérateur souhaite ensuite remplir la même bouteille avec un gaz disponible à 0°C. Les conditions de remplissage sont : la température ambiante = 30°C et la pression à l'entrée de la bouteille = 15 bars. L'opérateur souhaite remplir la bouteille à une vitesse de 2 bars par seconde.

Le calculateur lui indique alors que le remplissage doit être interrompu à une pression de 425 bars.

L'opérateur règle alors la température d'entrée du gaz à 0°C et la vitesse de remplissage à 2 bars par seconde et il commence le remplissage tout en mesurant la pression dans la bouteille. Lorsque la pression dans la bouteille atteint 425 bars, le remplissage est arrêté.

Le protocole de remplissage ainsi suivi est résumé dans le tableau ci-dessous.

| Paramètres | valeurs | Mode d'obtention |
|---|---|---|
| Température ambiante | 30°C | Mesure instantanée |
| Pression initiale | 15 bars | Mesure fixe |
| Vitesse de remplissage | 2 bars/s | Choix de l'opérateur |
| Température de remplissage | 0°C | Choix de l'opérateur |
| Pression finale | 425 bars | calcul |

**Revendications**

1. Procédé de remplissage de bouteille de gaz sous pression, le remplissage étant paramétré à l'aide d'une valeur prédéterminée de vitesse de remplissage exprimée sous la forme de la dérivée de la pression d'entrée dans la bouteille en fonction du temps, **caractérisé par le fait que** le remplissage est piloté uniquement à l'aide de la pression d'entrée dans la bouteille, le remplissage étant interrompu lorsque la pression d'entrée atteint une pression maximale de remplissage calculée en fonction de la vitesse de remplissage, en fonction de la température ambiante et en fonction de la pression initiale dans la bouteille, la pression maximale de remplissage dans la bouteille étant calculée pour correspondre à la plus sévère des deux conditions suivantes : capacité nominale de remplissage c'est-à-dire la masse de gaz qui peut être stockée dans la bouteille donnée sous la forme d'une pression nominale à une température nominale ou la température de calcul des bouteilles c'est-à-dire la température maximale pouvant être attente dans la bouteille en service.

**2.** Procédé selon la revendication 1, **caractérisé par le fait que** la température ambiante et la pression initiale dans la bouteille sont mesurées avant le remplissage.

**3.** Procédé selon l'une quelconque des revendications 1 ou 2, **caractérisé par le fait que** la vitesse de remplissage est choisie en fonction d'un taux de remplissage souhaité et/ou en fonction d'une durée de remplissage souhaitée.

**4.** Procédé selon l'une quelconque des revendications précédentes, **caractérisé par le fait que** la vitesse de remplissage est exprimée en dérivée de la pression d'entrée dans la bouteille en fonction du temps et est comprise entre 0,05 bar/s et 20 bar/s, de préférence entre 0,10 et 15 bar/s et plus préférentiellement encore entre 0,5 bar/s et 12 bar/s.

**5.** Procédé selon l'une des revendications précédentes, **caractérisé par le fait que** la vitesse de remplissage est sélectionnée soit par l'opérateur au moment du remplissage soit automatiquement.

**6.** Procédé selon l'une quelconque des revendications précédentes, **caractérisé par le fait que** le remplissage de la bouteille est réalisé à une température calculée en fonction de la pression initiale, de la température ambiante et de la pression maximale de remplissage.

**7.** Procédé selon la revendication 6, **caractérisé par le fait que** la température de remplissage est calculée en fonction de la vitesse de remplissage.

**8.** Procédé selon la revendication 7, **caractérisé en ce que** la pression maximale de remplissage est calculée en fonction de la pression initiale, de la température ambiante, de la température du gaz en entrée de bouteille et de la vitesse de remplissage.

**9.** Procédé selon l'une quelconque des revendications 6 à 8, **caractérisé par le fait que** la température de remplissage calculée est inférieure à la température ambiante.

**10.** Procédé selon l'une quelconque des revendications précédentes, **caractérisé par le fait que** la bouteille est de forme généralement cylindrique avec un rapport longueur L sur diamètre D, L/D, inférieur à six, de préférence de un à cinq, et plus préférentiellement encore de un à quatre.

**11.** Procédé selon l'une quelconque des revendications précédentes, **caractérisé en ce que** la pression maximale ($Pf_{100\%}$ masse) de remplissage correspondant à la condition de respect de la capacité nominale de remplissage de la bouteille est calculée selon la formule :

$$\frac{Pf_{100\%masse}}{Tamb} = (a \times LN(V) + b) \times (P0, 15°C) + c \times LN(V) + d \quad (1)$$

dans laquelle :

- Tamb est la Température ambiante en K,
- V est la vitesse de remplissage de la bouteille en bar/seconde,
- P0 est la Pression initiale en bar, et (P0, 15°C) est la pression initiale ramenée à 15°C en bar
- a, b, c et d ; des coefficients déterminés par régression.

**12.** Procédé selon l'une quelconque des revendications précédentes, **caractérisé en ce que** la pression maximale ($Pf_{100\%}$ masse) de remplissage correspondant à la condition de respect de la capacité nominale de remplissage de la bouteille est calculée selon la formule :

$$Pf_{100\%masse} = Tamb \times [(a \times LN(V) + b) \times (P0, 15°C) + (c \times LN(V) + d)] + (e + f \times P0 + g \times V) \times (Tr - Tamb)$$
$$(2)$$

dans laquelle :

- Tamb est la Température ambiante en K,
- Tr est la température du gaz de remplissage en K
- V est la vitesse de remplissage de la bouteille en bar/seconde,
- P0 est la Pression initiale en bar, et (P0, 15°C) est la pression initiale ramenée à 15°C en bar
- a, b, c, d, e, f et g ; des coefficients déterminés par régression

13. Procédé selon l'une quelconque des revendications précédentes, **caractérisé en ce que** la pression maximale (Pf85°C) de remplissage correspondant à la condition de respect de la température de calcul de la bouteille est calculée selon une formule polynomiale du type :

$$Pf_{85°c} = AAP0^n + BBP0^{n-1} + CCP0^{n-2} + DDP0^{n-3} + ... + ZZ$$

dans laquelle :

- P0 est la Pression initiale en bar,
- n est un entier et est au moins égal à 3,
- et les coefficients AA, BB, CC ..., ZZ sont des fonctions polynomiales de la vitesse de remplissage propre à la bouteille remplie et obtenus par régression.

**Patentansprüche**

1. Verfahren zum Befüllen von Flaschen mit unter Druck stehendem Gas, wobei das Befüllen mit Hilfe eines vorgegebenen Wertes der Befüllungsgeschwindigkeit, der in Form der zeitlichen Ableitung des Eingangsdrucks in die Flasche ausgedrückt ist, parametrisiert ist, **dadurch gekennzeichnet, dass** das Befüllen nur mit Hilfe des Eingangsdrucks in die Flasche gesteuert wird, wobei das Befüllen unterbrochen wird, wenn der Eingangsdruck einen maximalen Befüllungsdruck erreicht, der als Funktion der Befüllungsgeschwindigkeit, als Funktion der Umgebungstemperatur und als Funktion des Anfangsdrucks in der Flasche berechnet wird, wobei der maximale Befüllungsdruck in der Flasche so berechnet wird, dass er der strengstens der zwei folgenden Bedingungen entspricht: Nennkapazität für die Befüllung, d.h. die Gasmasse, die in der Flasche gespeichert werden kann, die in Form eines Nenndrucks bei einer Nenntemperatur gegeben ist, oder Rechentemperatur der Flaschen, d.h. die Maximaltemperatur, die in der behandelten Flasche erreicht werden kann.

2. Verfahren nach Anspruch 1, **dadurch gekennzeichnet, dass** die Umgebungstemperatur und der Anfangsdruck in der Flasche vor dem Befüllen gemessenwerden.

3. Verfahren nach einem der Ansprüche 1 oder 2, **dadurch gekennzeichnet, dass** die Befüllungsgeschwindigkeit als Funktion eines gewünschten Befüllungsanteils und/oder als Funktion einer gewünschten Befüllungsdauer gewählt wird.

4. Verfahren nach einem der vorhergehenden Ansprüche, **dadurch gekennzeichnet, dass** die Befüllungsgeschwindigkeit durch die zeitliche Ableitung des Eingangsdrucks in die Flasche ausgedrückt wird und im Bereich von 0,05 bar/s bis 20 bar/s, vorzugsweise im Bereich von 0,10 bis 15 bar/s und noch stärker bevorzugt im Bereich von 0,5 bar/s bis 12 bar/s liegt.

5. Verfahren nach einem der vorhergehenden Ansprüche, **dadurch gekennzeichnet, dass** die Befüllungsgeschwindigkeit entweder durch die Bedienungsperson zum Zeitpunkt des Befüllens oder automatisch gewählt wird.

6. Verfahren nach einem der vorhergehenden Ansprüche, **dadurch gekennzeichnet, dass** das Befüllen der Flasche bei einer Temperatur, die als Funktion des Anfangsdrucks, der Umgebungstemperatur und des maximalen Befüllungsdrucks berechnet wird, ausgeführt wird.

7. Verfahren nach Anspruch 6, **dadurch gekennzeichnet, dass** die Befüllungstemperatur als Funktion der Befüllungsgeschwindigkeit berechnet wird.

8. Verfahren nach Anspruch 7, **dadurch gekennzeichnet, dass** der maximale Befüllungsdruck als Funktion des Anfangsdrucks, der Umgebungstemperatur, der Temperatur des Gases beim Eintritt in die Flasche und der Befüllungsgeschwindigkeit berechnet wird.

9. Verfahren nach einem der Ansprüche 6 bis 8, **dadurch gekennzeichnet, dass** die berechnete Befüllungstemperatur niedriger als die Umgebungstemperatur ist.

10. Verfahren nach einem der vorhergehenden Ansprüche, **dadurch gekennzeichnet, dass** die Flasche eine im Allgemeinen zylindrische Form mit einem Verhältnis der Länge L zum Durchmesser D, L/D, das kleiner als sechs, vorzugsweise von eins bis fünf und noch stärker bevorzugt von eins bis vier ist, hat.

11. Verfahren nach einem der vorhergehenden Ansprüche, **dadurch gekennzeichnet, dass** der maximale Befüllungsdruck ($Pf_{100\%Masse}$), der der Bedingung der Berücksichtigung der Nennkapazität für die Befüllung der Flasche genügt, gemäß der folgenden Formel berechnet wird:

$$\frac{Pf\,100\%\,Masse}{Tamb} = (a\,x\,LN(V) + b)x\,(P0, 15°C) +\ c\,x\,LN(V) +\ d\ (1)$$

worin:

- Tamb die Umgebungstemperatur in K ist,
- V die Befüllungsgeschwindigkeit der Flasche in bar/Sekunde ist,
- P0 der Anfangsdruck in bar ist, und (P0, 15 °C) der auf 15 °C zurückgeführte Anfangsdruck in bar ist,
- a, b, c und d durch Regression bestimmte Koeffizienten sind.

12. Verfahren nach einem der vorhergehenden Ansprüche, **dadurch gekennzeichnet, dass** der maximale Befüllungsdruck ($Pf_{100\%Masse}$), der der Bedingung der Berücksichtigung der Nennkapazität für die Befüllung der Flasche genügt, gemäß der folgenden Formel berechnet wird:

$$Pf_{100\%Masse} = Tamb\ x\ [(a\ x\ LN(V) + b)\ x\ (P0, 15°C) + (c\ x\ LN(V) + d)] + (e + f\ x\ P0 + g\ x\ V)\ x\ (Tr − Tamb)\ (2)$$

worin:

- Tamb die Umgebungstemperatur in K ist,
- Tr die Befüllungstemperatur des Gases in K ist,
- V die Befüllungsgeschwindigkeit der Flasche in bar/Sekunde ist,
- P0 der Anfangsdruck in bar ist, und (P0, 15°C) der auf 15 °C zurückgeführte Anfangsdruck in bar ist,
- a, b, c, d, e, f und g durch Regression bestimmte Koeffizienten sind.

13. Verfahren nach einem der vorhergehenden Ansprüche, **dadurch gekennzeichnet, dass** der maximale Befüllungsdruck (Pf85 °C), der der Bedingung unter Berücksichtigung der Berechnungstemperatur der Flasche genügt, gemäß einer Polynomformel des folgenden Typs berechnet wird:

$$Pf_{85°C} = AAP0^{n} + BBP0^{n-1} + CCP0^{n-2} + DDP0^{n-3} + ... + ZZ$$

worin:

- P0 der Anfangsdruck in bar ist,

- n eine ganze Zahl größer oder gleich 3 ist,
- und die Koeffizienten AA, BB, CC..., ZZ Polynomfunktionen der der befüllten Flasche zugeordneten Befüllungsgeschwindigkeit sind, die durch Regression erhalten werden.

**Claims**

1. Method for filling a pressurized gas cylinder, the filling being parameterized using a predefined value of the filling rate such as a derivative of the input pressure in the cylinder as a function of time, **characterized in that** the filling is controlled using only the input pressure in the cylinder, the filling being interrupted when the input pressure reaches a maximum filling pressure, calculated according to the filling rate, according to the ambient temperature and according to initial pressure in the cylinder, the maximum filling pressure in the cylinder being calculated to match the more severe of the following two conditions: the nominal filling capacity, that is, the mass of gas that can be stored in the given cylinder in the form of a nominal pressure at a nominal temperature, or the cylinder design temperature, that is, the maximum temperature that can be reached in the cylinder in service.

2. Method according to Claim 1, **characterized in that** the ambient temperature and the initial pressure in the cylinder are measured before filling.

3. Method according to any one of Claims 1 to 2, **characterized in that** the filling rate is selected according to a desired filling ratio and/or according to a desired filling time.

4. Method according to any one of the preceding claims, **characterized in that** the filling rate is expressed as a derivative of the input pressure in the cylinder as a function of time and is between 0.05 bar/s and 20 bar/s, preferably between 0.10 and 15 bar/s, and even more preferably between 0.5 bar/s and 12 bar/s.

5. Method according to one of the preceding claims, **characterized in that** the filling rate is selected either by the operator at the time of filling or automatically.

6. Method according to any one of the preceding claims, **characterized in that** the cylinder is filled at a temperature calculated according to the initial pressure, the ambient temperature and the maximum filling pressure.

7. Method according to Claim 6, **characterized in that** the filling temperature is calculated according to the filling rate.

8. Method according to Claim 7, **characterized in that** the maximum filling pressure is calculated according to the initial pressure, the ambient temperature, the cylinder input gas temperature and the filling rate.

9. Method according to any one of Claims 6 to 8, **characterized in that** the calculated filling temperature is lower than the ambient temperature.

10. Method according to any one of the preceding claims, **characterized in that** the cylinder is generally cylindrical in shape with a ratio of length L to diameter D, L/D, lower than six, preferably between one and five, and even more preferably between one and four.

11. Method according to any one of the preceding claims, **characterized in that** the maximum filling pressure ($Pf_{100\%mass}$) corresponding to the precondition for the nominal filling capacity of the cylinder is calculated by the equation:

$$\frac{Pf100\%mass}{Tamb} = (a \times LN(V) + b) \times (P0.15°C) + c \times LN(V) + d \ (1)$$

where:

- Tamb is the ambient temperature in K,
- V is the cylinder filling rate in bar/second,
- P0 is the initial pressure in bar, and (P0, 15°C) is the initial pressure normed to 15°C in bar,
- a, b, c, and d are coefficients determined by regression.

12. Method according to any one of the preceding claims, **characterized in that** the maximum filling pressure ($Pf_{100\%}$ mass) corresponding to the precondition for the nominal filling capacity of the cylinder is calculated by the equation:

$$Pf_{100\%mass} = Tamb \times [(a \times LN(V) + b) \times (P0, 15°C) + (c \times LN(V) + d)] + (e + f \times P0 + g \times V) \times (Tr-Tamb) \quad (2)$$

where

- Tamb is the ambient temperature in K,
- Tr is the filling gas temperature in K,
- V is the cylinder filling rate in bar/second,
- P0 is the initial pressure in bar, and (P0, 15°C) the initial pressure normed to 15°C in bar,
- a, b, c, d, e, f and g are coefficients determined by regression.

13. Method according to any one of the preceding claims, **characterized in that** the maximum filling pressure (Pf85°C) corresponding to the precondition for the cylinder design temperature is calculated by a polynomial equation of the type:

$$Pf_{85°C} = AAP0^n + BBP0^{n-1} + CCP0^{n-2} + DDPO^{n-3} + ... + ZZ$$

where:

- P0 is the initial pressure in bar,
- n is an integer and is at least equal to 3,
- and the coefficients AA, BB, CC, ... , ZZ are polynomial functions of the filling rate specific to the filled cylinder and obtained by regression.

**EP 1 831 598 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1205704 A
- EP 1336795 A
- US 4527600 A
- US 4648430 A
- US 5771947 A
- US 5771948 A
- US 5810058 A
- US 5881779 A
- US 4993462 A
- US 5238030 A
- US 5752552 A
- EP 1331289 A
- EP 1452794 A2
- US 5628349 A
- US 6598624 B